# FASCICULE DE BREVET EUROPEEN

(11) **EP 1 361 138 B1**
(45) Date de publication et mention de la délivrance du brevet: **09.02.2005**
(21) Numéro de dépôt: 03290767.7
(22) Date de dépôt: 26.03.2003
(51) Int. Cl.: B62D 1/184

(54) **Ensemble de colonne de direction de véhicule, et véhicule muni d'un tel ensemble**
Fahrzeug-Lenksäulen-Einheit und Fahrzeug mit einer derartigen Einheit
Vehicle steering-column assembly and vehicle with such an assembly

(30) Priorité: 26.03.2002 FR 0203784
(43) Date de publication de la demande: 12.11.2003
(73) Titulaire: Faurecia Systèmes de Direction, 92000 Nanterre (FR)
(72) Inventeur: Holler, Romain, 68290 Masevaux (FR)
(74) Mandataire: Jacobson, Claude

(56) Documents cités:
- DE-C- 19 542 472
- GB-A- 2 352 285

## Description

La présente invention est relative à un ensemble de colonne de direction de véhicule, du type décrit dans le préambule de la revendication 1 (voir par exemple DE-A-195 42 472).

L'invention a pour but de fournir un dispositif simple à réaliser et fiable permettant d'obtenir le verrouillage de la colonne de direction dans les deux directions perpendiculaires l'une à l'autre.

A cet effet, l'invention a pour objet un ensemble de colonne de direction de véhicule du type précité, caractérisé par la partie caractérisante de la revendication 1.

L'ensemble suivant l'invention peut comporter une ou plusieurs des caractéristiques des revendications 2 à 13.

L'invention a également pour objet un véhicule automobile équipé d'un ensemble de colonne de direction de véhicule tel que défini ci-dessus.

Un exemple de réalisation de l'invention va maintenant être décrit en regard des dessins annexés, sur lesquels :
- la Figure 1 est une vue de côté schématique d'un ensemble de colonne de direction conforme à l'invention ;
- la Figure 2 est une vue éclatée schématique du dispositif de réglage de l'ensemble de la Figure 1 ;
- la Figure 3 représente en perspective le dispositif de réglage assemblé ;
- la Figure 4 est une vue en bout de ce dispositif ;
- les Figures 5 et 6 sont des vues partielles en perspective du même dispositif ;
- la Figure 7 montre en perspective de la face intérieure du flasque de hauteur ;
- la Figure 8 montre en perspective la face intérieure d'une bride de montage du dispositif de réglage, portant le flasque de la Figure 7 ;
- la Figure 9 représente en élévation, de façon schématique, le dispositif des Figures 3 et 4 ;
- la Figure 10 est une vue schématique prise en coupe suivant la ligne X-X de la Figure 9 ;
- la Figure 11 représente en perspective les principales pièces du dispositif de réglage ; et
- les Figures 12 et 13 sont des vues en bout qui montrent le fonctionnement de l'extrémité du tirant de verrouillage et de libération.

Dans tout ce qui suit, les orientations utilisées seront les orientations habituelles d'un véhicule automobile.

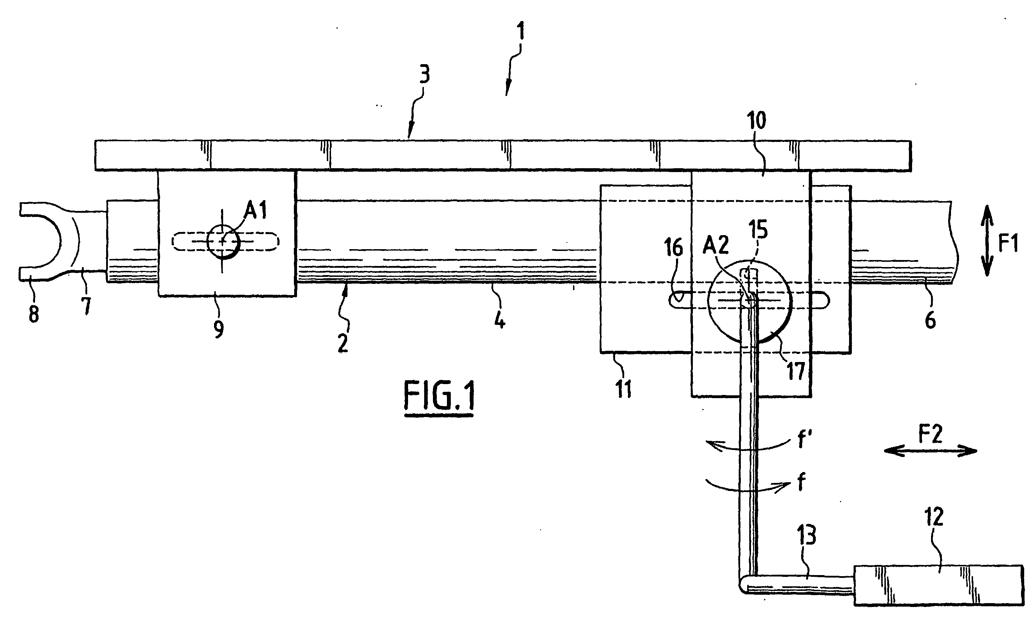

La figure 1 représente schématiquement un ensemble de colonne de direction 1 comprenant une colonne de direction 2 et une structure 3 de support de la colonne 2.

De manière classique, la colonne de direction 2 comprend un corps 4 et un arbre de direction 5 reçu à rotation dans le corps 4. L'extrémité arrière 6 de l'arbre 5 est destinée à être reliée à un volant de direction et son extrémité avant 7 présente une fourche de cardan 8 pour relier l'arbre 5 à un mécanisme de direction.

La structure de support 3 est fixée à la structure d'un véhicule automobile. Elle comprend à l'avant des moyens 9 d'articulation de la colonne de direction 2 autour d'un axe transversal A1 et de coulissement longitudinal de cette colonne.

A l'arrière, la structure de support présente deux brides latérales 10 disposés de part et d'autre d'un bloc de montage 11 solidaire du corps 4.

L'ensemble 1 comprend en outre un dispositif de réglage de la colonne 2 en hauteur et en profondeur. Ce dispositif comprend des moyens de réglage de la position angulaire de la colonne 2 par rapport à l'axe transversal A1, appelés « moyens de réglage en hauteur » car ils permettent un réglage sensiblement suivant la flèche verticale F1 de la position du volant de direction. Le dispositif de réglage comprend également des moyens de réglage de la position sensiblement avant-arrière du volant (flèche horizontale F2), dits « moyens de réglage en profondeur ».

L'ensemble 1 comprend encore des moyens de blocage ou de verrouillage de la position de réglage, et de libération. Ces moyens comprennent une poignée de commande 12 solidaire, via un levier coudé 13, d'une extrémité (l'extrémité gauche dans cet exemple) d'un tirant de verrouillage 14 dont l'axe A2 est parallèle à l'axe A1.

Comme cela est connu, le tirant 14 traverse les brides 10 et le bloc de montage 11. Il peut se déplacer vers le haut ou vers le bas par rapport aux brides 10, guidé par une rainure du bloc de montage 11 à peu près verticale 15 de celles-ci. De plus, le corps 4 peut se déplacer longitudinalement grâce à deux rainures du bloc de montage 11 à peu près horizontales 16 traversées par le tirant.

Le tirant 14 est associé à un mécanisme de verrouillage 17 à billes ou à cames commandé par la poignée 12 pour provoquer le rapprochement des brides 10 et ainsi le blocage en position de la colonne 2 par serrage du bloc de montage 11 entre les deux brides 10.

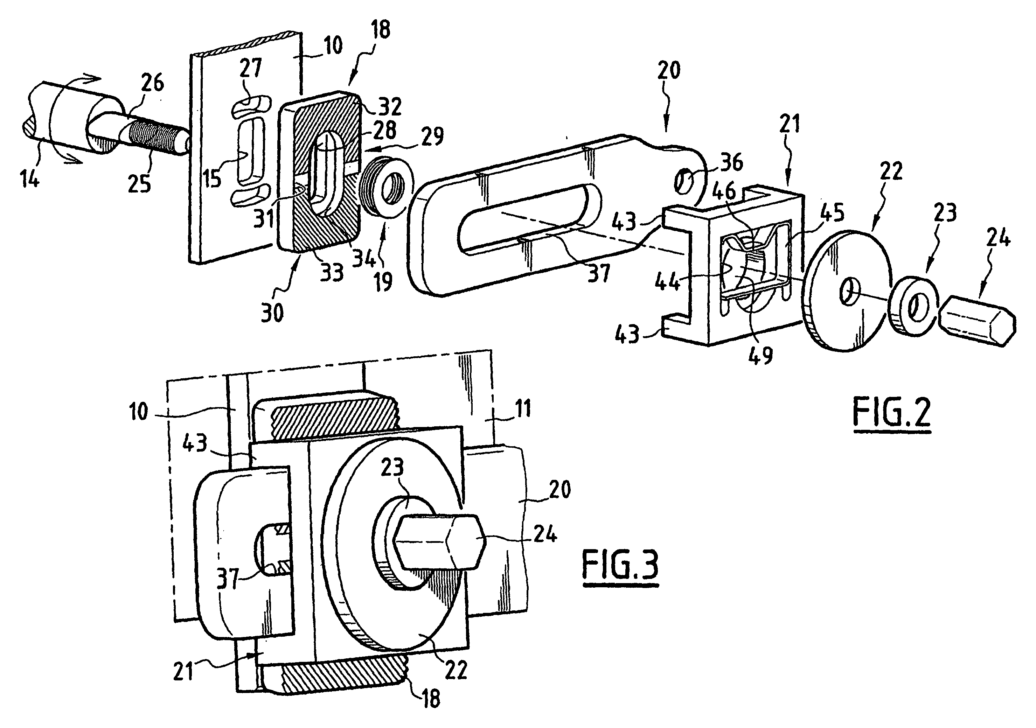

La Figure 2 représente les différentes pièces du dispositif de réglage en hauteur et profondeur disposées sur un côté de la colonne de direction, ici le côté droit. Eventuellement, un dispositif analogue peut être prévu symétriquement sur le côté gauche de la colonne.

Ces pièces sont, de l'intérieur vers l'extérieur : la bride 10, solidaire de la structure de support 3 ; un flasque de hauteur 18 ; un ressort d'écartement 19 ; un flasque de profondeur 20 ; un organe de couplage 21 ; une rondelle 22 ; une butée à billes 23 ; et un écrou 24. Tous ces éléments sont destinés à être traversés par la partie d'extrémité libre du tirant 14, laquelle comporte un bout fileté 25 destiné à se visser dans l'écrou 24, précédé d'un excentrique 26 dont le diamètre maximal est identique au diamètre courant du tirant.

La bride 10 comporte, à chaque extrémité de sa rainure 15, une lumière arquée 27 centrée au milieu de la rainure.

Le flasque de hauteur 18 a la forme d'une plaque rectangulaire allongée sensiblement verticalement. Cette plaque est traversée à mi-largeur par une rainure sensiblement verticale 28, et elle présente sur sa face extérieure deux zones dentées, supérieure 29 et inférieure 30, séparées l'une de l'autre par une plage horizontale non dentée 31. Les dents 32 de la zone 29 sont inclinées à 45° dans un sens, tandis que les dents 33 de la zone 30 sont inclinées à 45° dans l'autre sens et sont ainsi perpendiculaires aux dents 32.

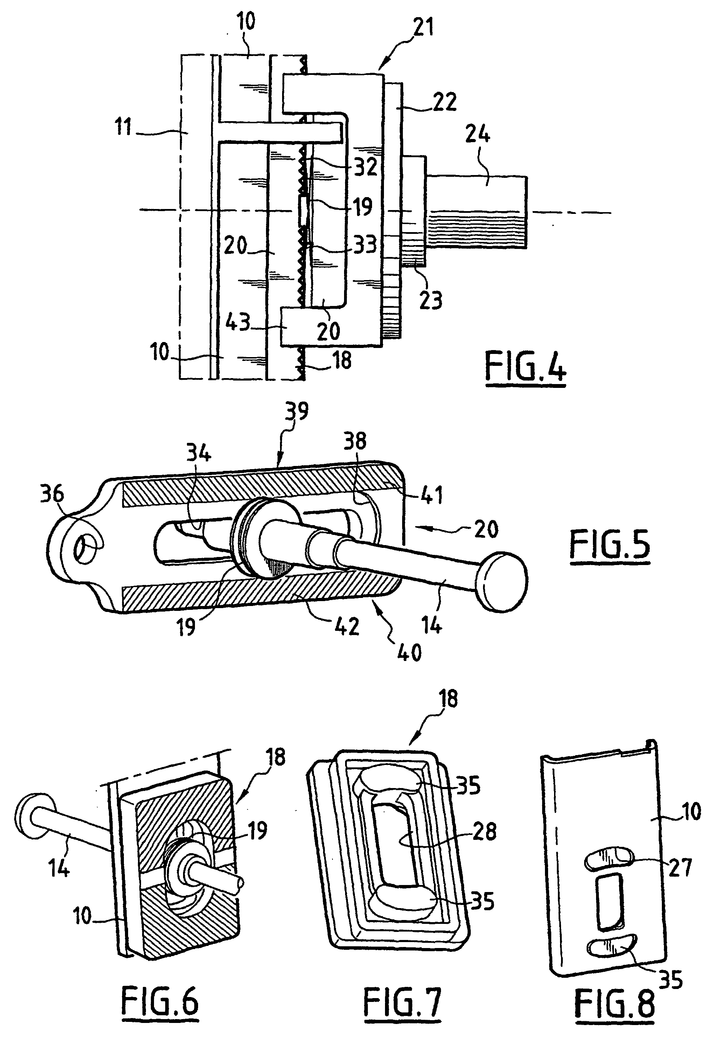

Comme on le voit sur les Figures 2 et 6, la rainure 28 est ménagée dans le fond d'un lamage 34 prévu dans la face extérieure du flasque. De plus (Figures 7 et 8), la face arrière ou intérieure du flasque comporte deux saillies incurvées 35 reçues avec un jeu circonférentiel dans les lumières 27 de la bride 10.

Le flasque de profondeur 20 (Figures 2 et 5) est une plaquette allongée dans une direction à peu horizontale, munie à son extrémité avant d'un trou d'articulation 36 et, sur la plus grande partie de sa longueur, d'une rainure de guidage longitudinale 37. Cette rainure est ménagée au fond d'un lamage longitudinal 38 prévu dans la face intérieure du flasque 20, visible sur la Figure 5. Le lamage 35 est bordé d'une zone dentée supérieure 39 et d'une zone dentée inférieure 40. Les dents 41 de la zone 39 sont inclinées à 45° dans le sens qui leur permet d'entrer en prise avec les dents supérieures 32 du flasque 18. De même, les dents 42 sont inclinées à 45° dans l'autre sens, ce qui leur permet d'entrer en prise avec les dents inférieures 33 du flasque 18.

Le ressort 19 est constitué de deux rondelles-ressorts circulaires dont le diamètre est égal à la largeur des lamages 34 et 38 des deux flasques et au diamètre des arrondis d'extrémité de ces lamages. Ainsi le ressort 19 est reçu à coulissement dans les deux lamages.

L'organe de couplage 21 est une plaque rectangulaire munie sur sa face intérieure, à chaque coin, d'un téton 43. L'écartement horizontal de ces tétons est égal à la largeur du flasque 18, tandis que leur écartement vertical est égal à la largeur du flasque 20. Dans sa face extérieure (Figures 2 et 12-13), l'organe 21 comporte un lamage 44 qui reçoit un ressort à lame 45 en forme générale de C. La branche supérieure du C présente elle-même une forme en U aplatie, avec une âme horizontale 46, et s'applique sur la face supérieure du lamage. La branche inférieure 47 du C, rectiligne, s'appuie en porte-à-faux sur deux saillies 48 prévues sur la face inférieure du lamage 45. Le fond de ce lamage présente par ailleurs un trou central 49 dont le diamètre est supérieur à celui du tirant 14. La géométrie est telle que la partie centrale de la branche 47 et l'âme 46 se trouvent sensiblement à la même distance verticale d de l'axe du trou 49.

A l'état assemblé du dispositif ainsi décrit, le flasque 18 est appliqué contre la face extérieure de la bride 10 avec une liberté limitée de débattement angulaire, grâce aux saillies 35 et aux lumières 27. Le flasque 20 est articulé par son trou 36 sur un pivot (non représenté) en saillie sur le bloc de montage 11 de la colonne de direction. Le ressort 19 est reçu dans les lamages en regard 34 et 38 des deux flasques, et les rainures 28 et 37 de ceux-ci sont maintenues perpendiculaires l'une à l'autre par les quatre tétons 43 de l'organe de couplage 21, lequel peut par conséquent coulisser le long des deux flasques.

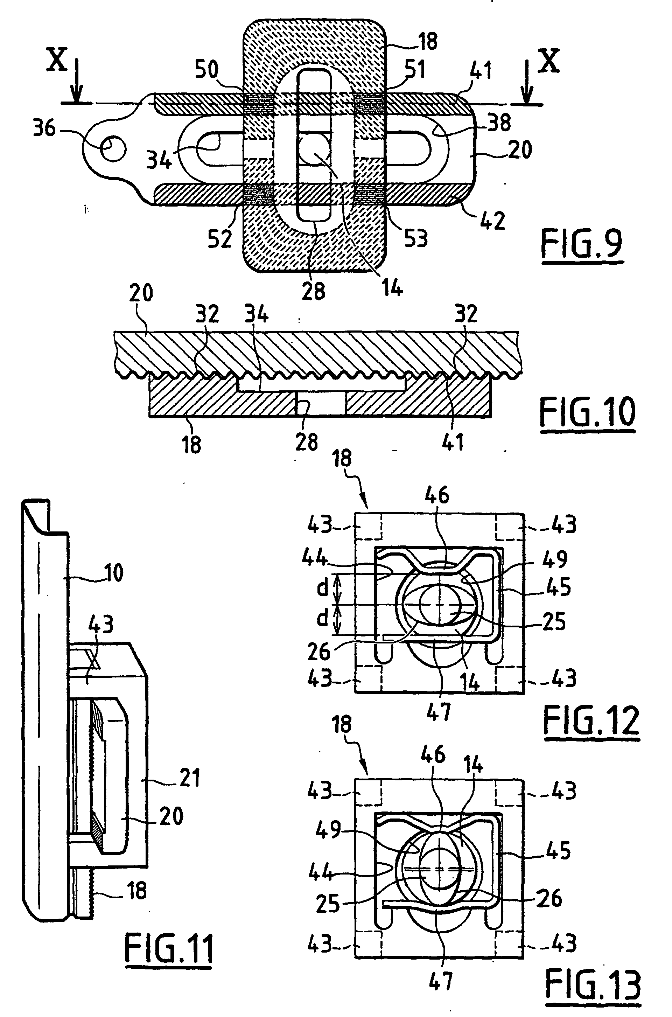

Le tirant 14 traverse successivement la rainure 15, la rainure 28, un orifice central du ressort 19, la rainure 37, le trou 49 (avec jeu), un trou central de la rondelle 22 et un trou central de la butée à billes 23, et son extrémité 25 est vissée dans l'écrou 24. L'excentrique 26 est logé dans le lamage 44 de l'organe 21 (Figures 2 et 13).

Lorsque la manette 12 est actionnée dans le sens de déverrouillage f de la Figure 1, le tirant, par l'intermédiaire de son mécanisme à came ou analogue 17, se déplace vers la droite sous l'effet du ressort 19. Ce dernier écarte alors l'un de l'autre les deux flasques 18 et 20 (Figure 4) dans une mesure suffisante pour mettre les dents de ces deux flasques hors de prise les unes avec les autres. Il est alors possible de déplacer le volant du véhicule en hauteur et/ou en profondeur, sans contact entre les dents des deux flasques.

Si le volant est déplacé en hauteur, le tirant 14 va entraîner vers le haut ou vers le bas le flasque 20, lequel va se déplacer sensiblement parallèlement à lui-même, en pivotant toutefois légèrement autour de l'axe avant A1 en même temps que le corps 4 de la colonne de direction. Dans ce mouvement, le tirant est guidé par la rainure 28 du flasque 18. L'organe 21 et le ressort 19 sont entraînés vers le haut ou vers le bas par ce mouvement, en étant guidés, le premier par la coopération de ses tétons 43 avec les côtés du flasque 18, le second par le lamage 34 du même flasque.

On remarque que le flasque 18 peut rester perpendiculaire au flasque 20 quelle que soit la position angulaire de ce dernier autour de l'axe A1, grâce à la possibilité de débattement angulaire du flasque 18 indiquée plus haut.

Si le volant est déplacé en profondeur, la colonne de direction entraîne vers l'avant ou vers l'arrière le flasque 20, et le tirant se déplace simplement par rapport à ce dernier le long de la rainure 37.

Lorsque l'un ou l'autre de ces mouvements, ou une combinaison des deux, a amené le volant dans sa position désirée, l'utilisateur actionne la manette 12 dans le sens du verrouillage f' (Figure 1), ce qui tire l'écrou 24 vers la gauche. Par l'intermédiaire des organes 21 à 23, le flasque 20 est pressé contre le flasque 18, en écrasant le ressort 19. De part et d'autre des lamages 34 et 38, dans quatre régions 50 à 53 (Figures 9 et 10), des dents de chaque flasque viennent en prise avec des dents conjuguées de l'autre flasque. Les deux régions supérieures 50 et 51 ayant des dents inclinées à 45° dans un sens et les deux autres régions ayant des dents inclinées à 45° dans l'autre sens, le blocage relatif des deux flasques est total et très fiable.

L'excentrique 26 du tirant, en coopération avec le ressort 45 de l'organe 21, permet d'éviter toute situation « dent sur dent » dans laquelle le blocage ne serait pas effectif.

Pour cela, la position de déverrouillage du tirant est celle de la Figure 12, dans laquelle l'excentrique est orienté horizontalement, sans contact avec le ressort 45. Lors de la rotation de verrouillage du tirant, l'excentrique entre simultanément en contact avec les parties 47 et 49 du ressort, mais, comme la branche supérieure du C est nettement moins raide, celle-ci fléchit davantage, ce qui provoque un léger mouvement relatif vers le bas de l'organe 21, et donc du flasque 20, par rapport au tirant. Cette poussée verticale induite sur le flasque 20, en combinaison avec l'action de pressage vers la gauche, garantit un bon engrènement des dents des quatre zones 50 à 53 quelle que soit la position de réglage du volant dans les deux directions considérées.

On remarque que le montage pivotant du flasque 20 autour du trou 36 permet d'assurer un engrènement effectif des dents, tandis que le libre débattement angulaire du flasque 18 par rapport à la bride 10 permet à ce flasque 18 de suivre ce mouvement de pivotement lors de l'engrènement.

## Revendications

1. Ensemble de colonne de direction de véhicule, du type comprenant une colonne de direction (2), dont une extrémité (6) est destinée à être reliée à un volant de direction et dont une autre extrémité (7) est destinée à être reliée à un mécanisme de direction, une structure (3) de support de la colonne de direction, des moyens de réglage de la position de la colonne de direction par rapport à la structure de support pour régler la position du volant de direction suivant deux directions perpendiculaires l'une à l'autre, et des moyens de verrouillage et de libération des moyens de réglage, ces moyens comprenant une tige de verrouillage et de libération, les moyens de verrouillage comprenant :
- un premier organe de blocage (18) muni d'une première rainure (28) de guidage par rapport à la tige (14), cette première rainure étant sensiblement parallèle à une première desdites directions ; et
- un deuxième organe de blocage (20) muni d'une deuxième rainure (37) de guidage par rapport à la tige ;
- les deux organes de blocage présentant des surfaces dentées qui comportent chacune au moins une première zone (29, 39) munie de premières dents (32, 41) inclinées par rapport à ladite première rainure,
**caractérisé en ce que** les surfaces dentées des deux organes de blocage (18, 20) sont en regard l'une de l'autre, et **en ce que** les moyens de verrouillage comprennent en outre un organe (21) de couplage des deux organes de blocage (18, 20), adapté pour maintenir la deuxième rainure perpendiculaire à la première rainure.

2. Ensemble suivant la revendication 1, **caractérisé en ce que** chaque organe de blocage (18, 20) comporte au moins une deuxième zone (30, 40) munie de deuxièmes dents (33, 42) inclinées par rapport à ladite première rainure (28) suivant une inclinaison différente de celle desdites premières dents (32, 41).

3. Ensemble suivant la revendication 2, **caractérisé en ce que** les premières et deuxièmes dents (32, 33, 41, 42) sont inclinées dans des sens opposés par rapport à ladite première rainure (28).

4. Ensemble suivant la revendication 3, **caractérisé en ce que** les premières et secondes dents (32, 33, 41, 42) sont inclinées à 45° dans des sens opposés par rapport à ladite première rainure (28).

5. Ensemble suivant l'une quelconque des revendications 2 à 4, **caractérisé en ce que** l'un au moins des organes de blocage (18, 20) comporte deux zones dentées séparées (29, 39, 30, 40) munies respectivement de dents (32,33, 41, 42) inclinées par rapport à ladite première rainure suivant des inclinaisons différentes.

6. Ensemble suivant la revendication 5, **caractérisé en ce que**, à l'état verrouillé, quatre paires de régions dentées (50 à 53) des organes de blocage (18, 20), réparties autour de la tige de verrouillage et de libération (14), sont en prise mutuelle.

7. Ensemble suivant l'une quelconque des revendications 1 à 6, **caractérisé en ce que** l'organe de couplage (21) est adapté pour coulisser le long de chaque organe de blocage (18, 20) parallèlement à la rainure (28, 34) de celui-ci.

8. Ensemble suivant l'une quelconque des revendications 1 à 7, **caractérisé en ce qu'**un organe de blocage (20) est articulé par un pivot (en 36) à la colonne de direction (12).

9. Ensemble suivant la revendication 8, **caractérisé en ce que** l'organe (20) de blocage articulé (20) est monté coulissant sur son pivot.

10. Ensemble suivant la revendication 8 ou 9, **caractérisé en ce que** l'autre organe de blocage (18) est monté sur la structure de support (3) avec une liberté de débattement angulaire qui lui permet de suivre les déplacements angulaires de l'organe de blocage articulé (20).

11. Ensemble suivant l'une quelconque des revendications 1 à 10, **caractérisé en ce que** la tige de verrouillage et de libération (14) comporte un excentrique (26) qui, dans la position angulaire de verrouillage de la tige, comprime deux organes élastiques (46, 47) diamétralement opposés suivant une direction sensiblement parallèle à l'une desdites rainures (28, 37).

12. Ensemble suivant la revendication 11, **caractérisé en ce que** les deux organes élastiques (46, 47) ont des raideurs différentes.

13. Ensemble suivant l'une quelconque des revendications 1 à 12, **caractérisé en ce que** la tige de verrouillage et de libération (14) est adaptée pour coulisser le long de l'une (28) desdites rainures (28, 37) à travers deux pièces (10) solidaires de la structure de support (3), et **en ce que** la colonne de direction (2) est adaptée pour coulisser par rapport à la tige en étant guidée par l'autre rainure (37).

14. Véhicule automobile, **caractérisé en ce qu'**il comprend un ensemble (1) de colonne de direction de véhicule suivant l'une quelconque des revendications précédentes.

## Patentansprüche

1. Fahrzeug-Lenksäulen-Einheit des Typs aufweisend eine Lenksäule (2) von welcher ein Ende (6) dazu vorgesehen ist, mit einem Lenkrad verbunden zu werden, und von der ein anderes Ende (7) dazu vorgesehen ist, mit einem Lenk-Mechanismus verbunden zu werden, eine Struktur (3) zum Tragen der Lenksäule, Vorrichtungen zum Steuern/Regeln der Position des Lenkrades gegenüber der Trage-Struktur entlang zweier aufeinander senkrechten Richtungen, und Vorrichtungen zum Verriegeln und Freigeben der Steuer-/Regel-Vorrichtungen, wobei diese Vorrichtungen einen Stab zum Verriegeln und Freigeben aufweisen, wobei die Verriegelungs-Vorrichtungen aufweisen:
- eine mit einer ersten Nut (28) zum Leiten des Stabes (14) versehene erste Blockage-Vorrichtung (18), wobei diese erste Nut im Wesentlichen parallel zu einer ersten der genannten Richtungen ist, und
- eine mit einer zweiten Nut (37) zum Leiten des Stabes versehene zweite Blockage-Vorrichtung (20),
- wobei die zwei Blockage-Vorrichtungen gezahnte Flächen aufweisen, von denen jede wenigstens eine mit gegenüber der genannten ersten Nut geneigten ersten Zähnen (32, 41) versehene erste Zone (29, 39) aufweist,
**dadurch gekennzeichnet, dass** die gezahnten Flächen der beiden Blockage-Vorrichtungen (18, 20) einander gegenüberliegen, und dass die Verriegelungs-Vorrichtungen außerdem eine Vorrichtung (21) zum Kuppeln der beiden Blockage-Vorrichtungen (18, 20) aufweist, welche dazu geeignet ist, die zweite Nut senkrecht zu der ersten Nut zu halten.

2. Einheit gemäß Anspruch 1, **dadurch gekennzeichnet, dass** jede Blockage-Vorrichtung (18, 20) wenigstens eine mit gegenüber der genannten ersten Nut (28) mit einer Neigung, welche von derjenigen der genannten ersten Zähne (32, 41) abweicht, geneigten zweiten Zähnen (33, 42) versehene zweite Zone (30, 40) aufweist.

3. Einheit gemäß Anspruch 2, **dadurch gekennzeichnet, dass** die ersten und zweiten Zähne (32, 33, 41, 42) bezüglich der ersten Nut (28) in entgegengesetzten Sinnen geneigt sind.

4. Einheit gemäß Anspruch 3, **dadurch gekennzeichnet, dass** die ersten und zweiten Zähne (32, 33, 41, 42) bezüglich der ersten Nut (28) in entgegengesetzten Sinnen um 45° geneigt sind.

5. Einheit gemäß einem der Ansprüche 2 bis 4, **dadurch gekennzeichnet, dass** wenigstens die eine der Blockage-Vorrichtungen (18, 20) zwei getrennte gezahnte Zonen (29, 39, 30, 40) aufweist, welche jeweils mit Zähnen (32, 33, 41, 42), welche bezüglich der ersten Nut mit unterschiedlichen Neigungen geneigt sind, versehen sind.

6. Einheit gemäß Anspruch 5, **dadurch gekennzeichnet, dass** im verriegelten Zustand vier rings des Verriegelungs-/Freigabe-Stabes (14) verteilte Paare von gezahnten Bereichen (50 bis 53) der Blockage-Vorrichtungen (18, 20) miteinander im Eingriff sind.

7. Einheit gemäß einem der Ansprüche 1 bis 6, **dadurch gekennzeichnet, dass** die Kupplungs-Vorrichtung (21) dazu geeignet ist, entlang jeder Blockage-Vorrichtung (18, 20) parallel zu ihrer Nut (28, 34) zu gleiten.

8. Einheit gemäß einem der Ansprüche 1 bis 7, **dadurch gekennzeichnet, dass** eine Blockage-Vorrichtung (20) durch einen Zapfen (in 36) an die Lenksäule (12) angelenkt ist.

9. Einheit gemäß Anspruch 8, **dadurch gekennzeichnet, dass** die angelenkte Blockage-Vorrichtung (20) auf ihrem Zapfen gleitend befestigt ist.

10. Einheit gemäß Anspruch 8 oder 9, **dadurch gekennzeichnet, dass** die andere Blockage-Vorrichtung (18) auf einer Trage-Struktur (3) befestigt ist, mit einem Winkel-Freiheitsgrad, welcher es ihr erlaubt, den Winkel-Verschiebungen der angelenkten Blockage-Vorrichtung (20) zu folgen.

11. Einheit gemäß einem der Ansprüche 1 bis 10, **dadurch gekennzeichnet, dass** der Verriegelungs- und Freigabe-Stab (14) eine Exzentrizität (26) aufweist, welche in der Stab-Verriegelungs-Winkel-Position zwei entlang einer im Wesentlichen zu einer der genannten Nuten (28, 37) parallelen Richtung einander entgegengesetzt gegenüberliegende elastische Vorrichtungen (46, 47) komprimiert.

12. Einheit gemäß Anspruch 11, **dadurch gekennzeichnet, dass** die beiden elastischen Vorrichtungen (46, 47) verschiedene Steifigkeiten aufweisen.

13. Einheit gemäß einem der Ansprüche 1 bis 12, **dadurch gekennzeichnet, dass** der Verriegelungs- und Freigabe-Stab (14) dazu geeignet ist, quer zu zwei kombinierten Teilen (10) der Trage-Struktur (3) entlang der einen (28) der genannten Nuten (28, 37) zu gleiten, und dass die Lenksäule (2) dazu geeignet ist, bezüglich des Stabes zu gleiten, während sie durch die andere Nut (37) geleitet wird.

14. Kraftfahrzeug, **dadurch gekennzeichnet, dass** es eine Fahrzeug-Lenksäulen-Einheit (1) gemäß einem der vorhergehenden Ansprüche aufweist.

## Claims

1. Vehicle steering column assembly, of the type comprising a steering column (2), one. end (6) of which is intended to be linked to a steering wheel and another end (7) of which is intended to be linked to a steering mechanism, plus a structure (3) for supporting the steering column, means of regulating the position of the steering column in relation to the support structure, in order to regulate the position of the steering wheel in two directions which are perpendicular to one another, and means of locking and releasing the regulating means, these means comprising a locking and release rod, the locking means comprising:
- a first locking member (18) provided with a first slot (28) for guiding in relation to the rod (14), this first slot being substantially parallel to a first of said directions; and
- a second locking member (20) provided with a second slot (37) for guiding in relation to the rod;
- the two locking members having toothed faces which each include at least one first region (29, 39) provided with first teeth (32, 41) which are at an angle to said first slot,
**characterised in that** the toothed faces of the two locking members (18, 20) face one another and **in that** the locking means also comprise a member (21) for coupling the two locking members (18, 20), said coupling member being adapted to keep the second slot perpendicular to the first slot.

2. Assembly according to claim 1, **characterised in that** each locking member (18, 20) includes at least one second region (30, 40) provided with second teeth (33, 42) which are inclined with respect to said first slot (28) and have a different inclination from that of said first teeth (32, 41).

3. Assembly according to claim 2, **characterised in that** the first and second teeth (32, 33, 41, 42) are inclined in opposite directions relative to said first slot (28).

4. Assembly according to claim 3, **characterised in that** the first and second teeth (32, 33, 41, 42) are inclined at 45° in opposite directions relative to said first slot (28).

5. Assembly according to any one of claims 2 to 4, **characterised in that** at least one of the locking members (18, 20) includes two separate toothed regions (29, 39, 30, 40), respectively provided with teeth (32, 33, 41, 42) which are inclined with respect to said first slot and have different inclinations.

6. Assembly according to claim 5, **characterised in that**, in the locked state, four pairs of toothed regions (50 to 53) of the locking members (18, 20), distributed around the locking and release rod (14), are in mutual engagement.

7. Assembly according to any one of claims 1 to 6, **characterised in that** the coupling member (21) is adapted to slide along each locking member (18, 20) parallel to the slot (28, 34) in said member.

8. Assembly according to any one of claims 1 to 7, **characterised in that** one locking member (20) is articulated to the steering column (12) by means of a pivot (at 36).

9. Assembly according to claim 8, **characterised in that** the articulated (20) locking member (20) is mounted so as to slide on its pivot.

10. Assembly according to claim 8 or 9, **characterised in that** the other locking member (18) is mounted on the support structure (3) with a freedom of angular clearance which permits it to follow the angular displacements of the articulated locking member (20).

11. Assembly according to any one of claims 1 to 10, **characterised in that** the locking and release rod (14) includes an eccentric (26) which, in the angular locking position of the rod, compresses two diametrically opposed resilient members (46, 47) in a direction substantially parallel to one of said slots (28, 37).

12. Assembly according to claim 11, **characterised in that** the two resilient members (46, 47) are of differing rigidity.

13. Assembly according to any one of claims 1 to 12, **characterised in that** the locking and release rod (14) is adapted to slide along one (28) of said slots (28, 37) through two parts (10) which are immovably attached to the support structure (3), and **in that** the steering column (2) is adapted to slide relative to the rod by being guided by the other slot (37).

14. Automotive vehicle, **characterised in that** it comprises a vehicle steering column assembly (1) according to any one of the preceding claims.
